(19) Europäisches Patentamt
European Patent Office
Office européen des brevets

(11) Publication number: **0 054 923**
**B1**

(12) # EUROPEAN PATENT SPECIFICATION

(45) Date of publication of patent specification: **02.04.86**

(51) Int. Cl.⁴: **C 08 L 43/04,** C 08 L 57/04

(21) Application number: **81110551.9**

(22) Date of filing: **17.12.81**

(54) **Curable resin composition and its use for preparing coatings.**

(30) Priority: **19.12.80 JP 181147/80**

(43) Date of publication of application:
**30.06.82 Bulletin 82/26**

(45) Publication of the grant of the patent:
**02.04.86 Bulletin 86/14**

(84) Designated Contracting States:
**BE DE FR GB IT**

(56) References cited:
**EP-A-0 019 290**
**US-A-4 043 953**
**US-A-4 191 713**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Kato, Yasushi**
**1-11-3, Katayama-cho**
**Nagata-ku Kobe-shi Hyogo-ken (JP)**
Inventor: **Furukawa, Hisao**
**Sanseiso, 96-1 Aza-Takigahira Shioya-cho**
**Tarumi-ku Kobe-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 054 923 B1

**Description**

The present invention relates to a curable resin composition comprising a vinyl resin having hydrolyzable silyl groups on the terminals or side chains. This composition exhibits outstanding adhesion to organic substrates after curing.

US—A—4,043,953 discloses an ambient temperature, moisture-curable coating composition containing an acrylic-silane interpolymer of at least one ethylenically unsaturated monomer containing at least one $CH_2=C<$ group which is devoid of active hydrogen atoms, a specific copolymerizable organoalkoxysilane, a cure accelerating catalyst, e.g. an organotin compound, and a monomeric hydrolytically reactive organosilicon stabilizer represented by the formula $X_nSi(OR)_{4-n}$ wherein X is an organic group having from 1 to 12 carbon atoms, R is methyl, ethyl, 2-methoxymethyl, 2-ethoxyethyl or an acyl group containing 5 or less carbon atoms and n is 0, 1 or 2.

US—A—4,191,713 discloses a room temperature-curable composition comprising a compound having at least one terminal silyl group capable of being cured at ambient temperature in the presence of water and a silicon compound having a group capable of reacting with the silyl group.

The reference discloses the use of condensing catalysts, e.g. organotin compounds and amine salts.

EP—A—0 019 290 discloses a moisture-curable composition comprising (a) a hydrolyzable silyl group containing polymer, e.g. a polyester or vinyl polymer, and (b) an organic amine or alkali metal hydroxide. The composition may contain additionally a reactive silicon compound, preferably a silane coupling agent containing an amino or epoxy group as a functional group.

A vinyl polymer having hydrolyzable silyl groups cures without any curing agent, but curing requires heating to elevated temperatures. Therefore, usually a curing agent is employed so that good results are obtained. A vinyl polymer having hydrolyzable silyl groups is very good in adhesion to inorganic substrates owing to the hydrolyzable silyl groups; it is poor, however, in adhesion to organic substrates.

After extensive studies, the present inventors found that a vinyl polymer having hydrolyzable silyl groups can be improved in its adhesion to organic substrates if a specific amine in addition to the organotin compound which is used as a curing agent for the silyl group containing vinyl polymer is used. The present invention is based on this finding.

It is an object of this invention to provide a curable resin composition which comprises (A) a silyl group-containing vinyl polymer in which the main chain consists essentially of a vinyl polymer and which has in its molecule at least one silicon atom connected to a hydrolyzable group on the terminals or side chains, (B) an organotin compound, and (C) the reaction product of a silane coupling agent containing at least one amino group and a silane coupling agent containing at least one epoxy group.

The vinyl polymer (A) is composed of a main chain consisting essentially of a vinyl polymer. Hydrolyzable silyl groups are attached to the terminals or side chains. The hydrolyzable silyl group is represented by the general formula:

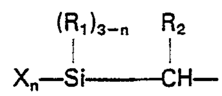

wherein X is a hydrolyzable group, $R_1$ and $R_2$ are hydrogen atoms, or alkyl, aryl, or aralkyl groups containing up to 10 carbon atoms, and n is an integer of 1, 2 or 3.

The silyl group-containing vinyl polymer to be used according to the present invention can be produced by various methods. Suitable methods include (a) hydrosilylation of a vinyl polymer having carbon-carbon double bonds with a hydrosilane and (b) copolymerization of a vinyl compound and a silyl compound having polymerizable double bonds. These methods will be described below in detail.

Method (a)

The silyl group-containing vinyl polymer can be produced by reacting a hydrosilane compound and a vinyl polymer having carbon-carbon double bonds in the presence of a transition metal catalyst of Group VIII. The hydrosilane used in this invention has the following general formula (I):

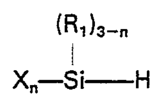
(I)

wherein $R_1$ is an alkyl, aryl, aralkyl group having up to 10 carbon atoms, X is a halogen atom, an alkoxy, acyloxy, aminoxy, phenoxy, thioalkoxy, ketoximate, alkenyloxy, or amino group, and n is an integer of 1, 2 or 3.

Examples of hydrosilanes of the general formula (I) are halogenated silanes such as methyldichlorosilane, trichlorosilane, and phenyl dichlorosilane, alkoxysilanes such as methyldiethoxysilane, methyl-

dimethoxysilane, phenyldimethoxysilane, trimethoxysilane, and triethoxysilane, acyloxysilanes such as methyldiacetoxysilane, phenyldiacetoxysilane, and triacetoxysilane, ketoximate silanes such as bis(dimethylketoximate) methylsilane, and bis(cyclohexylketoximate) methylsilane, alkenyloxysilanes such as methyldiisopropenoxysilane, and triisopropenoxysilane, and other silanes such as methyldiaminoxysilane, triaminoxysilane, methyldiaminosilane, and triaminosilane.

The hydrosilane can be used in any amount, preferably in an amount of 0.5 to 2 moles per carbon-carbon double bond. Hydrosilanes in excess of this amount may be used only to be recovered as unreacted hydrosilanes.

According to the present invention, the hydrosilane can be replaced by a highly reactive halogenated silane. The silyl group-containing vinyl polymer obtained from the halogenated silane cures rapidly at room temperature when exposed to moist air, giving off hydrogen chloride. Such a vinyl polymer, however, is of limited use because the liberated hydrogen chloride has an irritating odor and causes corrosion. Thus, it is desirable to replace the halogen functional group by another hydrolyzable functional group.

The vinyl polymer used for the method (a) may be any vinyl polymer except polymers containing hydroxy groups. Examples of such vinyl polymers are those polymers whose principal component is a homopolymer or copolymer of an acrylic ester and/or a methacrylic ester such as methyl acrylate, methyl methacrylate, ethyl acrylate, ethyl metacrylate, butyl acrylate, butyl methacrylate, 2-ethylhexyl acrylate, and 2-ethylhexylmethacrylate; carboxylic acids such as acrylic acid, methacrylic acid, itaconic acid, and fumaric acid; acid anhydrides such as maleic anhydride; epoxy compounds such as glycidyl acrylate or glycidyl methacrylate; amino compounds such as diethylaminoethyl acrylate, diethylaminoethyl methacrylate, and aminoethylvinyl ether; amide compounds such as acrylamide, methacrylamide, itaconic acid diamide, α-ethylacrylamide, crotonic acid amide, fumaric acid diamide, maleic acid diamide, N-butoxymethyl acrylamide, and N-butoxymethyl methacrylamide; and acrylonitrile, iminol methacrylate,

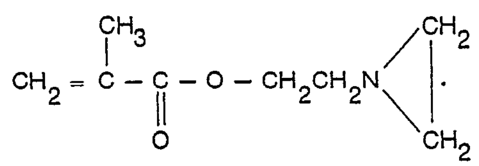

styrene, α-methyl styrene, vinyl chloride, vinyl acetate, and vinyl propionate.

The carbon-carbon double bond necessary for the hydrosilylation may be introduced into the terminals or side chains by radical copolymerization of allyl acrylate, allyl methacrylate, diallylphthalate, etc. into the vinyl polymer during polymerization or copolymerization of the above-listed vinyl compounds. The quantity of monomer for this purpose may be determined according to the number of silyl groups required in the desired polymer. In addition, the molecular weight may be adjusted by adding a chain transfer agent such as n-dodecyl mercaptan or t-dodecylmercaptan. The polymerization of these vinyl compounds can be accomplished in the presence or absence of a solvent.

The reaction of a hydrosilyl compound with a carbon-carbon double bond requires a catalyst of a transition metal complex compound. Such transition metals selected from Group VIII elements include platinum, rhodium, cobalt, palladium, and nickel. The hydrosilylation is accomplished at a temperature from 50 to 100°C and at a reaction time of 1 to 10 hours.

Method (b)

Method (b) is accomplished by radical polymerization of a vinyl compound and a silane compound represented by the general formula (II):

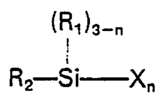

(II)

wherein $R_1$ is an alkyl, aryl or aralkyl group, $R_2$ is an organic residue having a polymerizable double bond, X is a halogen atom, an alkoxy, acyloxy, aminoxy, phenoxy, thioalkoxy, ketoximate, alkenyloxy or amino group, and n is an integer of 1, 2 or 3.

Specific examples of the silane compounds are

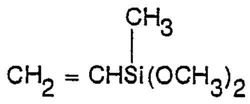 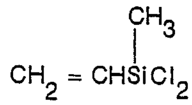 $CH_2 = CHSi(OCH_3)_3$ $CH_2 = CHSiCl_3$

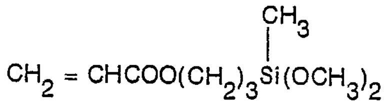 $CH_2 = CHCOO(CH_2)_3Si(OCH_3)_3$ 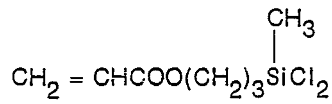

$CH_2 = CHCOO(CH_2)_3SiCl_3$ 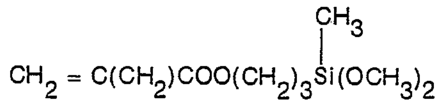 $CH_2 = C(CH_2)COO(CH_2)_3Si(OCH_3)_3$

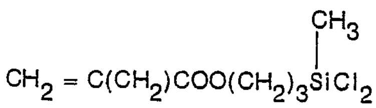 $CH_2 = C(CH_2)COO(CH_2)_3SiCl_3$

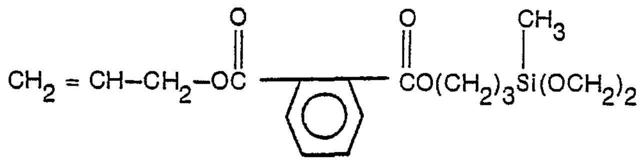

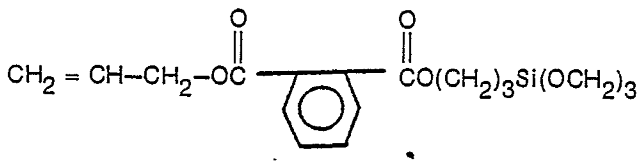

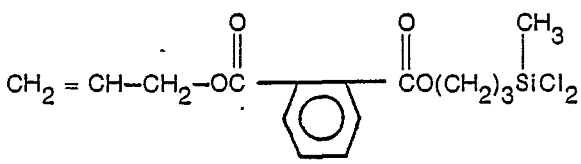

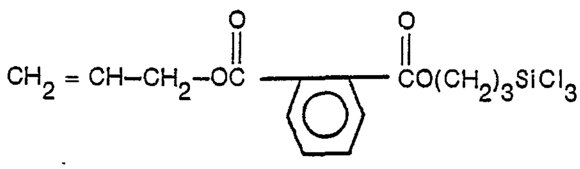

These silane compounds can be produced by various methods, for instance, by reacting acetylene, allyl acrylate, allyl methacrylate, or diallyl phthalate with methyl dimethoxy silane or methyl dichlorosilane or trimethoxysilane or trichlorosilane, in the presence of a Group VIII transition metal catalyst.

The vinyl compounds used include the compounds used for the preparation of the vinyl polymers in the above-mentioned method (a). In addition to those compounds mentioned in method (a), the following vinyl compounds containing hydroxyl groups may also be used: 2-hydroxyethyl acrylate, 2-hydroxyethyl methacrylate, 2-hydroxypropyl acrylate, 2-hydroxypropyl methacrylate, 2-hydroxyvinyl ether, N-methylol acrylamide, and "5700" (trade name, made by Toa Gosei).

The copolymerization of the vinyl compound and the silane compound is usually accomplished by solution polymerization. The vinyl compound, a silane compound, a radical initiator, and a chain transfer agent such as n-dodecyl mercaptan or t-dodecyl mercaptan to adjust the molecular weight of the silyl group-containing copolymer, are reacted at 50 to 150°C. If desired a solvent may be used; non-reactive solvents such as ethers, hydrocarbons, and ethyl acetate are preferred.

The silyl group-containing vinyl polymer obtained is composed of a main chain consisting essentially of the vinyl polymer and has in its molecule at least one silicon atom linked to a hydrolyzable group on the terminals or side chains.

The organotin compound used in this invention may be any tin compound which is generally used as a curing agent for compounds containing hydrolyzable silyl groups. Examples of such compounds are: carboxylic acid-type organotin compounds such as

$(n\text{-}C_4H_9)_2Sn(OCOC_{11}H_{22\text{-}n})_2$,
$(N\text{-}C_4H_9)_2Sn(OCOH{=}CHCOOCH_3)_2$,
$(n\text{-}C_4H_9)_2Sn(OCOCH{=}CHCOOC_4H_{9\text{-}n})_2$,
$(n\text{-}C_8H_{17})_2Sn(OCOC_{11}H_{22\text{-}n})_2$,
$(n\text{-}C_8H_{17})_2Sn(OCOCH{=}CHCOOCH_3)_2$,
$(n\text{-}C_8H_{17})_2Sn(OCOCH{=}CHCOOC_4H_{9\text{-}n})_2$,
$(n\text{-}C_8H_{17})_2Sn(OCOCH{=}CHCOOC_8H_{17}\text{-iso})_2$, and
$Sn(OCOC_8H_{17\text{-}n})_2$;

mercaptide-type organotin compounds such as
$(n\text{-}C_4H_9)_2Sn(SCH_2COO)$,
$(n\text{-}C_4H_9)_2Sn(SCH_2COOC_8H_{17}\text{-iso})_2$,
$(n\text{-}C_8H_{17})_2Sn(SCH_2COO)$,
$(n\text{-}C_8H_{17})_2Sn(SCH_2CH_2COO)$,
$(n\text{-}C_8H_{17})_2Sn(SCH_2COOCH_2CH_2OCOH_2S)$,
$(n\text{-}C_8H_{17})_2Sn(SCH_2COOCH_2CH_2CH_2CH_2OCOH_2S)$,
$(n\text{-}C_8H_{17})_2Sn(SCH_2COOC_8H_{17}\text{-iso})_2$,
$(n\text{-}C_8H_{17})_2Sn(SCH_2COOC_{12}H_{25}\text{-}n)_2$,

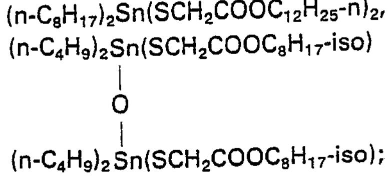
;

sulfide-type organotin compounds such as

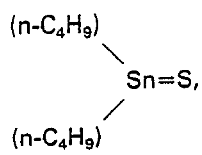
,

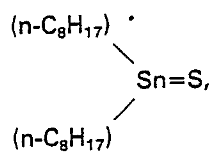
,

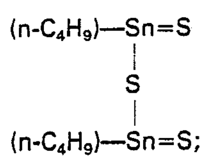
;

organotin oxides such as
$(n\text{-}C_4H_9)_2SnO$,
$(n\text{-}C_8H_{17})_2SnO$.

and reaction products of organotin oxides such as $(n\text{-}C_4H_9)_2SnO$ and $(n\text{-}C_8H_{17})_2SnO$ and esters such as ethyl silicate, ethyl silicate 40, dimethyl maleate, diethyl maleate, dioctyl maleate, dimethyl phthalate, diethyl phthalate, and dioctyl phthalate.

The amine used in this invention is the reaction product of a silane coupling agent containing at least one amino group and a silane coupling agent containing at least one epoxy group or a partial hydrolyzate of a silane coupling agent containing an amino group and a compound containing a hydrolyzable silyl group. Examples of silane coupling agents containing amino groups are $NH_2(CH_2)_3Si(OC_2H_5)_3$ and $NH_2(CH_2)_2NH(CH_2)_3Si(OCH_3)_3$. Examples of silane coupling agents containing epoxy groups are

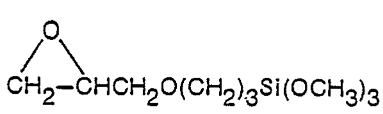 and 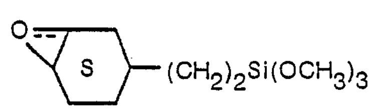.

Examples of compounds containing a hydrolyzable silyl group are ethyl silicate, ethyl silicate 40, methyl trimethoxysilane, methyltriethoxysilane, vinyltrimethoxysilane, vinyltriethoxysilane and γ-meth-

acryloxypropyltrimethoxysilane. Partial hydrolysis may be effected with water and an acid or alkaline catalyst.

The ratio of the components for the curable resin composition of this invention is as follows:

100 parts by weight of the silyl group-containing vinyl polymer (A), 0.01 to 10 parts by weight, preferably 0.1 to 8 parts by weight, of an organotin compound (B), and 0.01 to 20 parts, preferably 0.1 to 15 parts by weight, of the amine (C).

The component (A), when mixed with the organotin compound curing agent (B) and the amine (C) as mentioned above, provides a coating composition which has good adhesion to organic substrates after curing.

The composition of this invention is poor in adhesion to an organic substrate if instead of component (C) a silane coupling agent containing no amino group or an amine containing no hydrolyzable silyl group is used.

The silyl group-containing vinyl polymer composition of this invention can be cured at room temperature or low temperatures, and consequently finds use in paints, coating compositions, or adhesives. Because of its outstanding adhesion to organic as well as inorganic substrates, the composition of this invention may be applied e.g. to wood, fabrics, paper, plastics or organic coatings. In addition to the above-mentioned applications, the composition of this invention is useful as a coating material for aircraft, buildings, automobiles, glass, etc., and as a sealing compound and a surface treatment agent for inorganic substances or substrates.

The composition of this invention may be mixed with ethyl silicate, which is capable of copolycondensation with the composition, in order to improve the surface hardness of the coating resulting from the composition. Also, the composition of this invention can be blended with various resins used as a coating material, such as lacquer paints, acrylic lacquer paints, thermosetting acrylic paints, alkyd paints, melamine paints and epoxy paints in order to improve their adhesion and weather resistance.

The composition of this invention can be mixed with fillers and pigments, such as silica, calcium carbonate, magnesium carbonate, titanium oxide, iron oxide, and glass fibers.

The following examples will illustrate the practice of this invention. The molecular weight of the vinyl resins was determined by G P C (Gel Permeation Chromatography).

### Example 1

Into 90 g of xylene heated to 90°C were added dropwise a solution of azobisisobutyronitrile 2 g, dissolved in styrene 30 g, allyl methacrylate 16 g, methyl methacrylate 20 g, n-butyl methacrylate 19 g, butyl acrylate 14 g, maleic anhydride 4 g, and n-dodecyl mercaptan 2 g. After reaction for 10 hours, there was obtained a vinyl copolymer containing allyl groups and having a molecular weight of about 8000. The infrared absorption spectrum indicated the absorption by carbon-carbon double bonds at 1648 $cm^{-1}$ and the absorption by acid anhydride groups at 1780 $cm^{-1}$. The resulting polymer solution was stripped of 40 g of solvent under reduced pressure.

To 16 g of the solution of the vinyl copolymer containing allyl groups were added methyldimethoxysilane 1.5 g and an isopropanol solution of hexachloroplatinic acid 0.0005 g, and the reactants were allowed to react for 6 hours at 90°C in a closed vessel. The infrared absorption spectrum indicated no absorption at 1648 $cm^{-1}$. Thus, a silyl group-containing vinyl polymer was obtained.

### Example 2

Into 70 g of xylene heated to 90°C were added dropwise a solution of azobisisobutyronitrile 2 g dissolved in styrene 30 g, γ-methacryloxypropyltrimethoxysilane 22 g, methyl methacrylate 22 g, n-butyl methacrylate 15 g, butyl acrylate 18 g, and n-dodecyl mercaptan 1 g. After reaction for 10 hours, there was obtained a vinyl polymer containing silyl groups and having a molecular weight of about 12,000.

### Example 3

Into 70 g of xylene heated to 90°C were added dropwise a solution of azobisisobutyronitrile 2 g dissolved in styrene 30 g, γ-methacryloxypropyltrimethoxysilane 22 g, methyl methacrylate 52 g, n-butyl methacrylate 15 g, butyl acrylate 18 g, acrylamide 4 g, n-butanol 10 g, and n-dodecyl mercaptan 1 g. After reaction for 10 hours, there was obtained a vinyl polymer containing silyl groups and having a molecular weight of about 12,000.

### Example 4

Into 70 g of xylene heated to 120°C were added dropwise a solution of azobisisobutyronitrile 6 g dissolved in styrene 30 g, γ-methacryloxypropyltrimethoxysilane 22 g, methyl methacrylate 22 g, n-butyl methacrylate 13 g, butyl acrylate 18 g, acrylamide 4 g, maleic anhydride 2 g, n-butanol 10 g. After reaction for 10 hours, there was obtained a vinyl polymer containing silyl groups and having a molecular weight of about 6,000.

The polymer solutions obtained in Examples 1 to 4 were blended with a tin compound and an amine as shown in Table I, and then diluted with xylene to a proper viscosity (Ford cup 15 seconds) for coating. The resulting coating composition was applied to organic substrates as shown in Table I and tested for

adhesion after heat treatment as specified in Table I and one-day aging. Table I also shows the results of Reference Examples 1 to 4 in which no amine was used.

TABLE 1

| Examples | Tin compound Name | Tin compound amount† | Amine Name | Amine amount† | Organic coating substrate | Heat treatment | Crosscut test (JIS K5400) |
|---|---|---|---|---|---|---|---|
| Working Example 1 | DTL*[1] | 3 | A—1120*[2] | 0.5 | Alkyd stoving white enamel | 60°C 24 h. | 10 |
| Reference Example 1 | " | 3 | None | — | " | " | 0 |
| Working Example 2 | Stann*[3] ONJ—1F | 3 | A—1100*[4] A—187 | 1.0 | Lacquer surfacer | 60°C 50 min. | 10 |
| Reference Example 2 | " | 3 | None | — | " | " | 4 |
| Working Example 3 | Stann*[5] ONZ—20 | 3 | A—1120*[6] BO | 1.0 | Lacquer surfacer | 60°C 50 min. | 10 |
| Reference Example 3 | " | 3 | None | — | " | " | 4 |
| Working Example 3 | Stann*[7] JF—9B | 3 | A—1120*[8] Ethyl silicate | 1.0 | Cellophane | 110°C 30 s. | 10 |
| Reference Example 3 | " | 3 | None | — | " | " | 2 |
| Working Example 4 | OSnSi*[9] | 3 | A—187*[10] Ethylene-diamine | 0.5 | Alkyd stoving white enamel | 60°C 40 min. | 10 |
| Reference Example 4 | " | 3 | None | — | " | " | 0 |

(Note)
† amount is expressed in parts by weight based on 100 parts by weight of resin.
*[1] DTL: Dibutyl tin dilaurate.
*[2] A—1120 = $NH_2CH_2CH_2NHCH_2CH_2CH_2Si(OCH_3)_3$ made by Nippon Unicar Co., Ltd.
*[3] Stann ONJ—1F = mixture of $(n\text{-}C_8H_{17})_2Sn(OCOCH{=}CHCOOR)_2$ and $(n\text{-}C_8H_{17})_2Sn(SCH_2COOC_8H_{12}\text{-iso})$ wherein R = $C_4$—$C_{12}$ made by Sankyo Yuki Co., Ltd.
*[4] (A—1100 = Reaction product (at 70°C for 3 hours) of A—187

A—1100 $[NH_2CH_2CH_2CH_2Si(OCH_2CH_3)_3]$ and

A—187 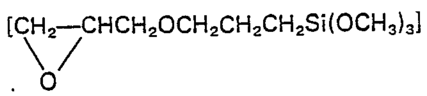

(A—1100, A—187 made by Nippon Unicar Co., Ltd.)

*[5] Stann ONZ—20 = $(n\text{-}C_8H_{17})_2Sn{=}S$ made by Sankyo Yuki Co., Ltd.
*[6] A—1120 = Reaction product (at 70°C for 3 hours) of BO

A—1120 and butylene oxide.

(A—1120; made by Nippon Unicar Co., Ltd.)

*[7] Stann JF—9B = $(n\text{-}C_4H_9)_2Sn(SCH_2CH_2COOR)_2$ wherein R = $C_4$—$C_{12}$ made by Sankyo Yuki Co., Ltd.

*8 A—1120 Ethyl silicate = Partial hydrolyzate of A—1120 and ethyl silicate

(A—1120; made by Nippon Unicar Co., Ltd.)

*9 OSnSi = Reaction product (at 170°C for 4 hours) of $(n\text{-}C_8H_{17})_2SnO$ and ethyl silicate 40
$(n\text{-}C_8H_{17})_2SnO$: made by Sankyo Yuki Co., Ltd.)

*10 A—187 Ethylenediamine = Reaction product (at 70°C for 3 hours) of A—187 and ethylenediamine

(A—187; made by Nippon Unicar Co., Ltd.)

**Claims**

1. A curable resin composition which comprises
A) a silyl group containing vinyl polymer prepared by
a) reacting in the presence of a catalyst of a Group VIII transition metal a hydrosilane compound of the general formula (I)

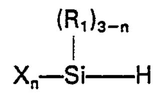 (I)

wherein $R_1$ is an alkyl, aryl or aralkyl group having up to 10 carbon atoms; X is a halogen atom, an alkoxy, acyloxy, aminoxy, phenoxy, thioalkoxy, ketoximate, alkenyloxy, or amino group, and n is an integer of 1, 2 or 3, with a vinyl homopolymer or copolymer free of hydroxy groups and having carbon-carbon double bonds in a molar ratio of from 0.5:1 to 2:1 or
b) radical copolymerization of a vinyl compound and a silane compound of the general formula (II)

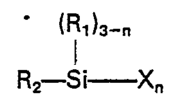 (II)

wherein $R_1$ is an alkyl, aryl or aralkyl group having up to 10 carbon atoms, $R_2$ is an organic residue having a polymerizable double bond and X is a halogen atom, an alkoxy, acyloxy, aminoxy, phenoxy, thioalkoxy, ketoximate, alkenyloxy or amino group, and n is an integer of 1, 2 or 3,
B) an organotin compound curing catalyst and
C) the reaction product of a silane coupling agent containing at least one amino group and a silane coupling agent containing at least one epoxy group,
in a ratio of (A) to (B) to (C) of from 100 parts A to 0.01 to 10 parts B to 0.01 to 20 parts C.

2. Curable resin composition according to claim 1, characterized in that the component (C) is a partial hydrolyzate of a silane coupling agent containing an amino group and a compound containing a hydrolyzable silyl group.

3. Curable resin composition according to claim 1 or 2, characterized by an additional content of D) ethyl silicate.

4. The use of the curable resin composition according to claims 1 to 3 for preparing coatings.

**Patentansprüche**

1. Eine härtbare Harzmasse, die umfaßt
A) ein Silylgruppen enthaltendes Vinylpolymerisat, hergestellt durch
a) Umsetzung in Gegenwart eines Katalysators aus einem Übergangsmetall der Gruppe VIII einer Hydrosilanverbindung der allgemeinen Formel (I)

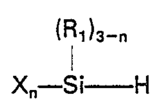 (I)

in der $R_1$ einen Alkyl-, Aryl oder Aralkylrest mit bis zu 10 Kohlenstoffatomen bedeutet, X ein Halogenatom, einen Alkoxy-, Acyloxy-, Aminoxy-, Phenoxy-, Thioalkoxy-, Ketoxymat-, Alkenyloxy- oder Aminorest darstellt und n eine ganze Zahl im Wert von 1, 2 oder 3 ist, mit einem Vinyl-Homopolymerisat oder -copolymerisat, das frei von Hydroxylgruppen ist und Kohlenstoff-Kohlenstoff-Doppelbindungen aufweist, in einem Molverhältnis von 0,5:1 bis 2:1 oder

b) radikalische Copolymerisation einer Vinylverbindung mit einer Silanverbindung der allgemeinen Formel (II)

$$\begin{array}{c} (R_1)_{3-n} \\ | \\ R_2\text{—Si——}X_n \end{array} \qquad (II)$$

in der $R_1$ einen Alkyl-, Aryl- oder Aralkylrest mit bis zu 10 Kohlenstoffatomen bedeutet, $R_2$ einen organischen Rest mit einer polymerisierbaren Doppelbindung darstellt und X ein Halogenatom, einen Alkoxy-, Acyloxy-, Aminoxy-, Phenoxy-, Thioalkoxy-, Ketoxymat-, Alkenyloxy- oder Aminorest bedeutet und n eine ganze Zahl im Wert von 1, 2 oder 3 ist,

B) eine Organozinnverbindung als Härtungskatalysator und

C) das Reaktionsprodukt eines mindestens eine Aminogruppe enthaltenden Silan-Kupplungsmittels und eines mindestens eine Epoxygruppe enthaltenden Silan-Kupplungsmittels

in einem Verhältnis von (A) zu (B) zu (C) von 100 Teilen A:0,01 bis 10 Teilen B:0,01:20 Teilen C.

2. Härtbare Harzmasse nach Anspruch 1, dadurch gekennzeichnet, daß die Komponente (C) ein partielles Hydrolysat eines eine Aminogruppe enthaltenden Silan-Kupplungsmittels und einer einer hydrolysierbare Silylgruppe enthaltenden Verbindung ist.

3. Härtbare Harzmasse nach Anspruch 1 oder 2, gekennzeichnet durch einen zusätzlichen Gehalt an D) Äthylsilikat.

4. Verwendung der härtbaren Harzmasse nach den Ansprüchen 1 bis 3 zur Herstellung von Beschichtungen.

**Revendications**

1. Composition de résine durcissable, qui comprend:

(A) un polymère vinylique contenant le groupe silyle, préparé par:

(a) la réaction, en présence d'un catalyseur d'un métal de transition du Groupe VIII, d'un composé d'hydrosilane de la formule générale (I):

$$\begin{array}{c} (R_1)_{3-n} \\ | \\ X_n\text{—Si——H} \end{array} \qquad (I)$$

dans laquelle $R_1$ est un groupe alkyle, aryle ou aralkyle comportant jusqu'à 10 atomes de carbone; X est un atome d'halogène, un groupe alcoxy, acyloxy, aminoxy, phénoxy, thioalcoxy, cétoximate, alcényloxy ou amino, et *n* est un nombre entier égal à 1, 2 ou 3, avec un homopolymère ou copolymère vinylique ne comportant pas de groupes hydroxyles et présentant des doubles liaisons carbone-carbone dans un rapport molaire de 0,5/1 à 2/1, ou

(b) la copolymérisation radicalaire d'un composé vinylique et d'un composé de silane de la formule générale (II):

$$\begin{array}{c} (R_1)_{3-n} \\ | \\ R_2\text{—Si——}X_n \end{array} \qquad (II)$$

dans laquelle $R_1$ est un groupe alkyle, aryle ou aralkyle comportant jusqu'à 10 atomes de carbone; $R_2$ est un reste organique comportant une double liaison polymérisable, X est un atome d'halogène, un groupe alcoxy, acyloxy, aminoxy, phénoxy, thioalcoxy, cétoximate, alcényloxy ou amino, et *n* est un nombre entier égal 1, 2 ou 3.

(B) un catalyseur de durcissement constitué par un composé organo-stannique, et

(C) le produit de réaction d'un agent de combinaison de silane comprenant au moins un groupe amino et d'un agent de combinaison de silane contenant au moins un groupe époxyde

dans des proportions molaires de (A) à (B) à (C) des 100 parties de A pour 0,01 à 10 parties de B et pour 0,01 à 20 parties de C.

2. Composition de résine durcissable suivant la revendication 1, caractérisée en ce que le composé (C) est un hydrolysat partiel d'un agent de combinaison de silane contenant un groupe amino et d'un composé contenant un groupe silyle hydrolysable.

3. Composition de résine durcissable suivant la revendication 1 ou 2, caractérisée par une quantité additionnelle de: (D) silicate d'éthyle.

4. Utilisation de la composition de résine durcissable suivant les revendications 1 à 3 pour préparer des revêtements.